# EUROPEAN PATENT SPECIFICATION

(11) **EP 3 607 808 B1**
(45) Date of publication and mention of the grant of the patent: **21.04.2021**
(21) Application number: 18188466.9
(22) Date of filing: 10.08.2018
(51) Int. Cl.: A01B 49/02

(54) **AN IMPLEMENT FOR SOIL PREPARATION**
ARBEITSGERÄT ZUR BODENVORBEREITUNG
INSTRUMENT DE PRÉPARATION DU SOL

(43) Date of publication of application: 12.02.2020
(73) Proprietor: Kverneland Group Les Landes Genusson S.A.S., 85130 Les Landes Genusson (FR)
(72) Inventor: Denis, Thomas, 85130 La verrie (FR); Le Clec'h, Ronan, 44390 Nort-Sur-Erdre (FR)
(74) Representative: Bittner, Thomas L.

(56) References cited:
- WO-A1-2014/165897
- WO-A1-2016/166727
- DE-A1- 3 105 656
- DE-U1- 9 002 944
- DE-U1-202014 103 035
- NL-C1- 1 019 075

## Description

The present invention refers to an implement for soil preparation.

### Background

An agricultural implement may be carried by a tractor or hooked to the tractor for operation. On a main or support frame of the implement, different tools may be provided. For one type of implement called disc harrow, there is a plurality of discs arranged or received on the frame. For another type of implement called cultivator, there is a plurality of tines arranged or received on the frame. One or more rows of soil cultivating tools like for example tines, discs, coulters, blades, and/or rotors may be provided. For further cultivation of the soil there may be one or more further soil cultivating tools. For example, a so-called levelling device or tool may be provided. In addition or as an alternative, one or more rollers may be provided, the rollers, with respect to the plurality of tines, may be provided in the rearward direction (direction of travelling or moving in operation).

The document DE 20 2014 103035 U1 describes an agricultural machine, in particular an agricultural machine for metering seeds and / or fertilizer in solid or liquid form. The agricultural machin comprises a store of the metered seed and / or fertilizer in solid or liquid form, a pair of support means which are formed by a wheel or a roller and which are provided with two application devices of the metered seed and / or fertilizer in solid or liquid form, which are mainly formed by seed shoes. At least two of the application devices are mounted in a frame, the frame being adjustable in height and at least one of the application devices being mounted adjustable in height in the frame.

In the document DE 31 05 656 A1, a machine combination for agriculture with an earth working machine and a drill machine is disclosed.

The document WO 2016 / 166727 A1 discloses a seed drill.

The document DE 90 02 944 U1 describes a harrow with a plurality of hook-shaped resilient tines arranged in a frame in a plurality of rows and offset with regard to one another.

The document NL 1 019 075 C1 relates to a depth adjustment device for altering the depth of a goose foot coulter which is operated independently from the coulter angle adjustment device.

In the document WO 2014 / 165897 A1, a planting machine for forming a trench for planting seeds and/or fertilizer in a ground surface is disclosed.

### Summary

It is an object of the invention to provide an implement for soil preparation with improved operability.

For solving the problem an implement according to the independent claim 1 is provided. Further embodiments are disclosed in the dependent claims.

According to an aspect, an implement for soil preparation is provided. The implement comprises a frame, a first arrangement of one or more soil cultivating tools, a second arrangement of one or more soil cultivating tools and a third arrangement of one or more soil cultivating tools. The first arrangement of one or more soil cultivating tools is received on the frame and is configured for soil cultivation. The second arrangement of one or more soil cultivating tools is movable in relation to the first arrangement of one or more soil cultivating tool, articulated to the frame through a first parallelogram joint, and, with respect to the first arrangement of one or more soil cultivating tools, located in the rearward direction with regard to a direction of travelling or moving of the implement in operation. The third arrangement of one or more soil cultivating tools is movable in relation to the first arrangement of one or more soil cultivating tools and to the second arrangement of one or more soil cultivating tools, respectively, and articulated to the second arrangement of one or more soil cultivating tools through a second parallelogram joint.

The implement may be a cultivator. Alternatively, the implement may be another type of implement such as a disc harrow. The first arrangement of one or more soil cultivating tools may comprise a plurality of tines.

An assembly combining the first and second parallelogram joints for holding both the second and third arrangement of one or more soil cultivating tools is provided. The parallelogram joints linked provide for improved functionality and operability of the arrangements of one or more soil cultivating tools in operation.

The second arrangement of one or more soil cultivating tools may comprise a first rolling tool configured to roll on the soil in operation. The rolling tool may be provided by only a single or a plurality of roller elements. The roller elements may have a roller surface closed or provided with openings. A rolling tool working width may be generally equal to the working width provided by the first arrangement of one or more soil cultivating tools and / or the third arrangement of one or more soil cultivating tools. In case of a plurality of roller elements providing for the roller or rolling tool, there may be a continuous arrangement of roller elements in the rearward direction with respect to the first arrangement of one or more soil cultivating tools.

The third arrangement of one or more soil cultivating tools may comprise a levelling device configured to level the soil in operation. The levelling device may comprise a second rolling tool configured to roll on the soil in operation. For example, the levelling device may comprise levelling discs. Alternatively or additionally, the levelling device may comprise a non-rolling tool, for example a finger harrow, a levelling bar or one or more levelling tines. In a direction transverse to the travelling or moving direction of the cultivator in operation, the levelling device may be extending over a levelling device working width which may be generally equal to a working width provided by the first arrangement of one or more soil cultivating tools. The levelling device may be provided with one or more levelling sub-tools such as discs together providing for the levelling device.

The first rolling tool may comprise a (further) levelling device, in addition to or as an alternative to the levelling device provided with the third arrangement of one or more soil cultivating tools.

The second arrangement of one or more soil cultivating tools, with respect to the third arrangement of one or more soil cultivating tools, may be located in the rearward direction. Consequently, in operation the soil (pre-)cultivated by the third arrangement of one or more soil cultivating tools following will be further cultivated by the second arrangement of one or more soil cultivating tools.

The third arrangement of one or more soil cultivating tools may be connected to a subframe member through the second parallelogram joint, the subframe member connected to the first parallelogram joint.

The subframe member may be provided with a single or multiple part or piece design. In case of multiple part design the multiple parts may be connected rigid and / or pivotably.

End points for both the first and second parallelogram joints may be hinged or pivotably connected to the subframe member.

Both the first and second parallelogram joints, with respect to the subframe member, may be extending in the forward direction. The first and second parallelogram joints may be provided in an arrangement one above the other, thereby, the parallelogram joints being separated in a vertical direction from each other. A lower arm member of one of the parallelogram joints may be provided in a separation distance from an upper arm member of the other one of the parallelogram joints provided above the one of the parallelogram joints.

Both the first and second parallelogram joints may be extending in a vertical direction. Alternatively, the first and/or the second parallelogram joint may be extending in a horizontal or a diagonal direction. The first parallelogram joint may be extending in a different direction than the second parallelogram joint. The first and second parallelogram joints may be provided in an arrangement one above the other or alternatively one in front of the other.

The second arrangement of one or more soil cultivating tools, with respect to the subframe member, may be located in the rearward direction. The second arrangement of one or more soil cultivating tools may be connected to the subframe member by a backward extending holding member which may be provided with a single or multiple part or piece design.

The third arrangement of one or more soil cultivating tools, at least in part, may be located essentially below the second parallelogram joint. With respect to the subframe member, the third arrangement of one or more soil cultivating tools may be provided in a forward direction. The third arrangement of one or more soil cultivating tools may be connected to the second parallelogram joint by a combination of one or more backward extending holding members and one or more forward extending holding members which may be joined rigidly and / or pivotably.

For both the first and second parallelogram joints an upper and a lower arm member may be pivotably connected to a connection point from a plurality of connection points provided on the subframe member.

At least one of the upper and lower arm member of the first parallelogram joint together with at least one of the upper and lower arm member of the second parallelogram joint may be connected to a common connection point on the subframe member. The lower arm member of the first parallelogram joint and the lower arm member of the second parallelogram joint may be connected to the common connection point on the subframe member. The common connection point may be provided below all remaining connection points from the plurality of connection points on the subframe member.

A first adjustment mechanism may be functionally connected to the first parallelogram joint and configured to adjust a working parameter for the first parallelogram joint. For example, for changing the working parameter the first parallelogram joint may be pivoted relative to the main frame by means of the adjustment mechanism. By such pivoting, for example, a working depth may be adjusted for at least one of the second and third arrangement of one or more soil cultivating tools.

An adjustment member of the first adjustment mechanism may be connected to the main frame on one side and the first parallelogram joint on the other side. The first adjustment mechanism may be connecting to the lower arm member and / or the upper arm member of the first parallelogram joint. The first adjustment mechanism may connect to the lower arm member in a member sector in which the lower arm members of a double parallelogram joint assembly are connected by a transversely extending connection member. The first adjustment mechanism may be provided with at least one of a manual adjustment element, a hydraulic adjustment element, and an electric adjustment element pivotably connected to the main frame and the first parallelogram joint, for example, the lower arm member.

A second adjustment mechanism is functionally connected to the second parallelogram joint and configured to adjust a working parameter for the second parallelogram joint. The second adjustment mechanism may be functionally connected to the upper arm member of the second parallelogram joint, for example, in a sector of the upper arm member adjacent to a connection point of the upper arm member distant to the subframe. The second adjustment mechanism may be provided with at least one of a manual adjustment element, a hydraulic adjustment element, and an electric adjustment element. By means of the second adjustment mechanism a relative location or position of the third arrangement of one or more soil cultivating tools with respect to the main frame and / or the subframe member may be adjusted.

An adjustment member of the second adjustment mechanism may be connected to at least one of the subframe member and the first parallelogram joint on one side and the second parallelogram joint on the other side. The second adjustment mechanism may be connecting to the lower arm member of the first parallelogram joint. In this case, the second adjustment mechanism may be a dependent adjustment relative to the first adjustment mechanism.

A connection of the second adjustment mechanism to one of the upper arm member and the lower arm member of the first parallelogram joint may be located between a front connection point and a rear connection point of the upper arm member or the lower arm member of the first parallelogram, the rear connection point being located rearward of the front connection point. In this case, a dependency between the adjustment of the first and second parallelogram joint may be generated. The dependency may result in the third arrangement of one or more soil cultivating tools being moved downward when the second arrangement of one or more soil cultivating tools is moved upward.

A distance between the connection of the second adjustment mechanism to the upper arm member or lower arm member of the first parallelogram joint and the front connection point or the rear connection point of the upper or lower arm member of the first parallelogram may impact a dependency ratio between the first adjustment mechanism and the second adjustment mechanism. A dependency ratio lower than 1:1, for example 1:5, may provide improved operability of the adjustment mechanisms. The improved operability may occur, for example, when, the first arrangement of one or more soil cultivating tools is a plurality of tines, the second arrangement of one or more soil cultivating tools is a roller and the third arrangement of one or more soil cultivating tools is a levelling device. Improved operability may comprise a deeper working depth into the soil of the levelling device and, simultaneously, a deeper working depth into the soil of the plurality of tines, which may be desired for example for improving levelling quality. Thereby, self-adjustment of the levelling device may be provided while, at the same time, independent adjustment of the levelling device may be provided by the second adjustment mechanism, for example enabling fine setting.

Alternatively, the connection of the second adjustment mechanism to one of the upper arm member and the lower arm member of the first parallelogram joint may not be located between the front connection point and the rear connection point of the upper arm member or the lower arm member of the first parallelogram. Thereby, a dependency between the adjustment of the first and the second parallelogram joint may be generated. The dependency may result in the third arrangement of one or more soil cultivating tools being moved upward when the second arrangement of one or more soil cultivating tools is moved upward. Thereby, improved operability may be provided when, for example, the first arrangement of one or more soil cultivating tools is a plurality of tines, the second arrangement of one or more soil cultivating tools is composed of a tine harrow and the third arrangement of one or more soil cultivating tools is composed of a levelling device. Improved operability may comprise displacement in the same upper or lower direction of the levelling device simultaneously to the tine harrow, which may be desired for example to release any blockage.

The manual adjustment system of the first and/or the second adjustment mechanism, respectively may be provided with a pin adjustment system. The pin adjustment system may comprise a plurality of holes in one of the members of one of the parallelograms. The first and/or the second adjustment mechanism, respectively may be connected to the respective parallelogram by placing a pin in one of the holes. The plurality of holes may provide a plurality of positions to connect the adjustment mechanism in a desired position.

Alternatively, the pin adjustment system may be provided with a lower pin and an upper pin. The lower pin may set the desired lowest position and the upper pin may set the desired highest position. The first and/or the second adjustment mechanism, respectively may be connected to the respective parallelogram by connecting the respective adjustment mechanism to the lower pin or the upper pin.

With regard to the first and second adjustment mechanism, both mechanisms may be connected to a control unit provided on the cultivator or on the tractor to which the cultivator is hooked. In a mode of operation both the first and second adjustment mechanism may be operated for adjusting the working parameters for both. For example, in response to adjusting the working parameter for the first parallelogram joint, the working parameter for the second parallelogram joint may be adjusted in dependence on the adjustment applied to the first parallelogram joint.

At least one of the first and second parallelogram joints may be provided with a double parallelogram arrangement or assembly. With regard to the first and second parallelogram joints, in the double parallelogram arrangement, two parallelogram sub-joints may be provided separated by a distance in the transverse direction. One or more of the arm members of the parallelogram sub-joints may be connected to each other by one or more transversely extending transverse connection members. Similarly, a first and second subframe member may be connected by a transversely extending connection member.

In embodiments in which the first and the second parallelogram joints are extending in a vertical direction, the first and second parallelogram joints may each be provided with a left and a right arm member. With regard to the left and right arm members, the alternative embodiments disclosed above in connection with the upper and lower arm members may apply, mutatis mutandis.

There may be one or more bar members transversely extending between the parallelogram joints on opposite sides.

### Description of further embodiments

Following, further embodiments are described with reference to figures. In the figures show:
- Fig. 1: a schematic representation of a cultivator hooked to a tractor;
- Fig. 2: a schematic view of a cultivator in Fig. 1 from the side, wherein tines are located above the soil surface;
- Fig. 3: a schematic view of a cultivator in Fig. 1 from the side, wherein the tines are in a soil working position;
- Fig. 4: a schematic representation of an arrangement comprising two parallelogram joints;
- Fig. 5: a schematic representation of another arrangement comprising two parallelogram joints; and
- Fig. 6: a schematic representation of a further arrangement comprising two parallelogram joints.

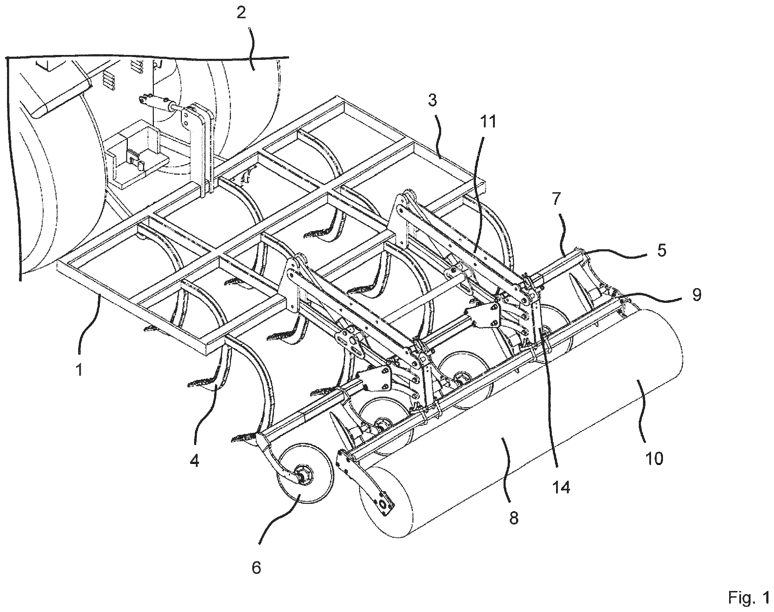

Fig. 1 shows a schematic representation of an implement, which in the embodiment shown is a cultivator 1, hooked to a tractor 2. On a main or support frame 3, a first arrangement of soil cultivating tools is received, which in the embodiment shown, is an arrangement of a plurality of tines 4. The tines 4 provide for an arrangement of soil cultivating tools engaging with the soil while the cultivator 1 is moved over the soil.

With respect to the plurality of tines 4, a levelling device 5 is located in the rearward direction. The levelling device 5 comprises a plurality of disc elements 6 held by a bar member 7 extending transversely with respect to a direction of travelling or moving in operation.

With respect to the levelling device 5, a roller element 8 is located in the rearward direction. The roller element 8 is held by a further bar member 9 extending transversely with respect to the direction of travelling. According to the embodiment shown in Fig. 1, there is a single roller element 8. Alternatively, there may be at least two roller elements (not shown) connected to the bar member 9. Also, alternatively to the roller element 8 shown in Fig. 1, instead of having a closed roller surface 10, the roller surface may be provided with openings (not shown).

The roller element 8, together with the further bar member 9, provides for a second arrangement of one soil cultivating tool. The levelling device 5 comprising the disc elements 6, together with the bar member 7 provides for a third arrangement of soil cultivating tools.

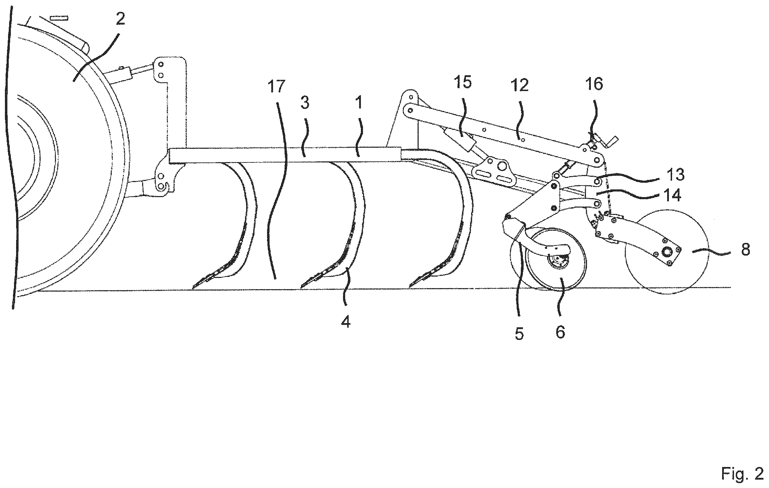

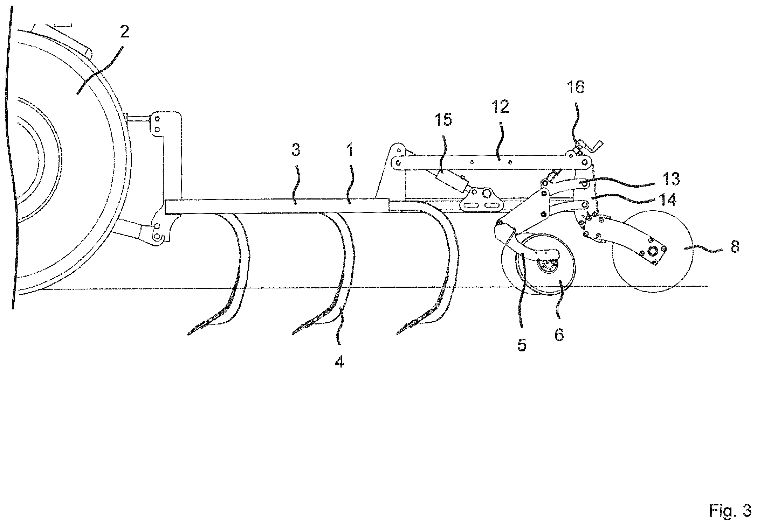

There is a joint assembly 11 connected to the main frame 3 comprising a first and a second parallelogram joint 12, 13 (see Fig. 2 and 3). The first parallelogram joint 12 provided with an upper and a lower bar member 12a, 12b is connected on one side to the main frame 3. On the other side the first parallelogram joint 12 is connected to a subframe member 14. The second parallelogram joint 13 comprising an upper bar member and a lower bar member 13a, 13b is also connected to the subframe member 14. For the cultivator 1 shown in Fig. 1 both the first and second parallelogram joints 12, 13 are provided as a double arrangement of parallelogram joints provided with arrangements of the two parallelogram joints on each side and the arrangements separated from each other in the transverse direction..

The soil cultivating tool provided with the roller element 8 is connected to the subframe member 14. The levelling device 5 providing for the other soil cultivating tool is connected to the second parallelogram joint 13 which is extending in the forward direction from the subframe member 14.

There is a first adjustment element 15 connecting to the main frame 3 on one side and the lower arm member 12b of the first parallelogram joint 12 on the other side for adjusting the position of the first parallelogram joint 12, specifically, a position relative to the main frame 3. The first adjustment element 15 comprises a hydraulic cylinder. Alternatively or in addition, the first adjustment element 15 may comprise a mechanical adjustment member. Because of the double arrangement design for the first parallelogram joint 12, there is a double arrangement for the first adjustment element 15.

There is a second adjustment element 16 connecting to the second parallelogram joint 13 for adjusting.

According to the side views of the cultivator 1 hooked to the tractor 2 in Fig. 2 and 3, there is an elevated position in which the plurality of tines 4 is located above a surface 17 of the soil (Fig. 2) and a lowered position in which the plurality of tines 4 is engaged with the soil (Fig. 3). For switching between the different positions adjustment of the first and / or the second adjustment element 15, 16 may be applied. The first and second adjustment element 15, 16 may be controlled by a common control unit (not shown) to which both adjustment elements are functionally connected, wherein the common control unit is provided on the cultivator 1 or the tractor 2.

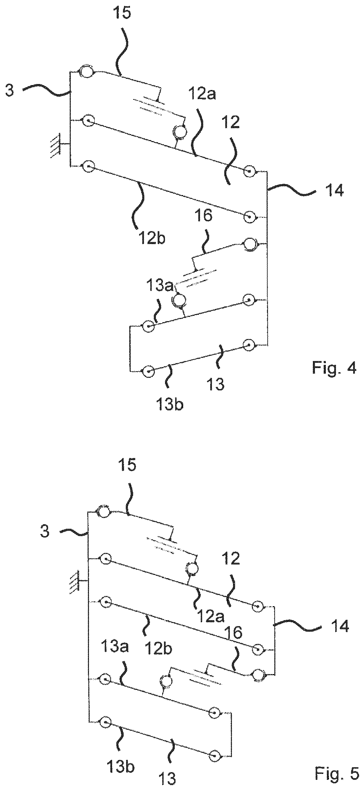

Fig. 4 to 6 show schematic representations of different arrangements comprising the first and second parallelogram joints 12, 13, the arrangements shown providing for design different from the one shown in Fig. 1 to 3. Similarly to the design in Fig. 1, according to Fig. 4 the first parallelogram joint 12 is provided between the main frame 3 and the subframe member 14, wherein the subframe member 14 receives the soil cultivating tool provided with the roller element 8. The second parallelogram joint 13 is extending in the forward direction from the subframe member 14 and receives the soil cultivating tool comprising the levelling device 5. The first adjustment element 15 connects between the main frame 3 and the upper bar member 12a of the first parallelogram joint 12. The second adjustment element 16 connects between the subframe member 14 and the upper arm member 13a of the second parallelogram joint 13.

In an alternative arrangement in Fig. 5, both the first and second parallelogram joints 12, 13 are connecting to the main frame 3. Again, the first parallelogram joint 12 on the other side is connecting to the subframe member 14 receiving the soil cultivating tool having the levelling device 5. The second adjustment element 16 is connecting between the subframe member 14 and the upper arm member 13a of the second parallelogram joint 13. The second parallelogram joint 13 is connected to the soil cultivating tool provided with the roller element 8 on a side distant to the main frame 3.

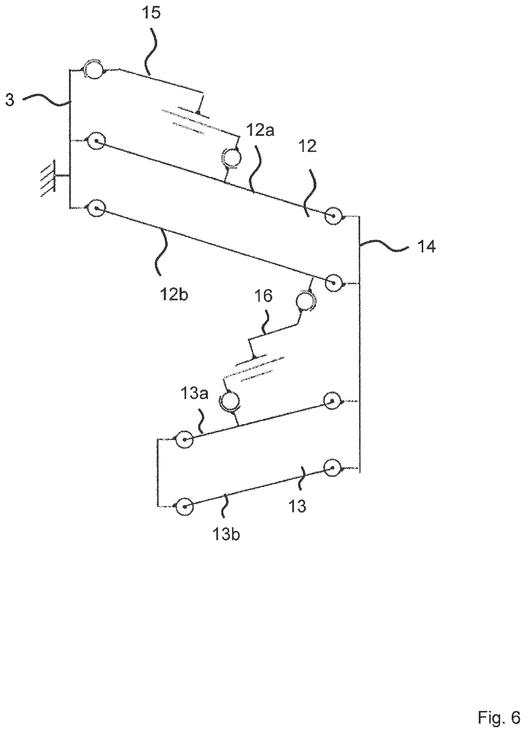

The arrangement in Fig. 6 is similar to the arrangement in Fig. 4. However, the second adjustment element 16 is connecting between the lower arm member 12b of the first parallelogram joint 12 and the upper arm member 13a of the second parallelogram joint 13.

The subframe member 14 may not be provided as a separate part but may form part of the second arrangement of soil cultivating tools or the third arrangement of soil cultivating tools. Alternatively or additionally, the subframe member may form part of one of the members of the first or the second parallelogram joint 12, 13.

The features disclosed in this specification, the figures and / or the claims may be material for the realization of various embodiments, taken in isolation or in various combinations thereof.

## Claims

1. An implement for soil preparation, comprising
- a frame (3);
- a first arrangement of one or more soil cultivating tools (4) received on the frame (3) and configured for soil cultivation;
- a second arrangement of one or more soil cultivating tools, the second arrangement of one or more soil cultivating tools
- movable in relation to the first arrangement of one or more soil cultivating tool (4),
- articulated to the frame (3) through a first parallelogram joint (12), and
- with respect to the first arrangement of one or more soil cultivating tools (4), located in a rearward direction with regard to a direction of travelling or moving of the implement in operation;
- a third arrangement of one or more soil cultivating tools, the third arrangement of one or more soil cultivating tools
- movable in relation to the first arrangement of one or more soil cultivating tool (4) and to the second arrangement of one or more soil cultivating tools, respectively, and
- articulated to the second arrangement of one or more soil cultivating tools through a second parallelogram joint (13); and
- an adjustment mechanism (16) functionally connecting to the second parallelogram joint (13) and configured to adjust a working parameter for the second parallelogram joint (13).

2. The implement according to claim 1, wherein the second arrangement of one or more soil cultivating tools comprises a first rolling tool (8) configured to roll on the soil in operation.

3. The implement according to claim 1 or 2, wherein the third arrangement of one or more soil cultivating tools comprises a levelling device (6) configured to level the soil in operation.

4. The implement according to at least one of the preceding claims, wherein the second arrangement of one or more soil cultivating tools, with respect to the third arrangement of one or more soil cultivating tools, is located in the rearward direction.

5. The implement according to at least one of the preceding claims, wherein the third arrangement of one or more soil cultivating tools is connected to a subframe member (14) through the second parallelogram joint (13), the subframe member (14) connected to the first parallelogram joint (12).

6. The implement according to claim 5, wherein both the first and second parallelogram joints (12, 13), with respect to the subframe member (14), are extending in the forward direction.

7. The implement according to at least one of the claims 1 to 5, wherein both the first and second parallelogram joints (12, 13) are extending in the vertical direction.

8. The implement according to at least one of the preceding claims, wherein the third arrangement of one or more soil cultivating tools is located essentially below the second parallelogram joint (13).

9. The implement according to at least one of the preceding claims, referring to claim 5, wherein for both the first and second parallelogram joints (12, 13) an upper and a lower arm member (12a, 12b; 13a, 13b) are pivotably connected to a connection point from a plurality of connection points provided on the subframe member (14).

10. The implement according to claim 9, wherein at least one of the upper and lower arm member (12a, 12b) of the first parallelogram joint (12) together with at least one of the upper and lower arm member (13a, 13b) of the second parallelogram joint (13) is connected to a common connection point on the subframe member (14).

11. The implement according to at least one of the preceding claims, further comprising a first adjustment mechanism (15) functionally connecting to the first parallelogram joint (12) and configured to adjust a working parameter for the first parallelogram joint (12).

12. The implement according to claim 11, wherein an adjustment member of the first adjustment mechanism (15) is connected to the main frame (3) on one side and the first parallelogram joint (12) on the other side.

13. The implement according to claim 5 or at least one of the claims 6 to 12, referring to claim 5, wherein an adjustment member of the second adjustment mechanism (16) is connected to at least one of the subframe member (14) and the first parallelogram joint (12) on one side and the second parallelogram joint (13) on the other side.

14. The implement according to at least one of the preceding claims, wherein at least one of the first and second parallelogram joints (12, 13) is provided with a double parallelogram arrangement.

## Patentansprüche

1. Arbeitsgerät zur Bodenaufbereitung, aufweisend
- einen Rahmen (3);
- eine erste Anordnung eines oder mehrerer Bodenbearbeitungswerkzeuge (4), welche am Rahmen (3) aufgenommen und zur Bodenbearbeitung ausgebildet sind;
- eine zweite Anordnung eines oder mehrerer Bodenbearbeitungswerkzeuge, wobei die zweite Anordnung eines oder mehrerer Bodenbearbeitungswerkzeuge
- relativ zur ersten Anordnung eines oder mehrerer Bodenbearbeitungswerkzeuge (4) beweglich ist,
- durch ein erstes Parallelogrammgelenk (12) gelenkig am Rahmen (3) angebracht ist,
und
- in Bezug auf die erste Anordnung eines oder mehrerer Bodenbearbeitungswerkzeuge (4) in einer rückwärtigen Richtung bezogen auf eine Fahrtrichtung oder Bewegungsrichtung des Arbeitsgerät im Betrieb angeordnet ist;
- eine dritte Anordnung eines oder mehrerer Bodenbearbeitungswerkzeuge, wobei die dritte Anordnung eines oder mehrerer Bodenbearbeitungswerkzeuge
- relativ zur ersten Anordnung eines oder mehrerer Bodenbearbeitungswerkzeuge (4) beziehungsweise zur zweiten Anordnung eines oder mehrerer Bodenbearbeitungswerkzeuge beweglich ist, und
- durch ein zweites Parallelogrammgelenk (13) gelenkig an der zweiten Anordnung eines oder mehrerer Bodenbearbeitungswerkzeuge angebracht ist; und
- einen Einstellmechanismus (16), welcher funktionell mit dem zweiten Parallelogrammgelenk (13) verbunden und dafür eingerichtet ist, einen Arbeitsparameter für das zweite Parallelogrammgelenk (13) einzustellen.

2. Arbeitsgerät nach Anspruch 1, wobei die zweite Anordnung eines oder mehrerer Bodenbearbeitungswerkzeuge ein erstes Walzwerkzeug (8) aufweist, welches dafür eingerichtet ist, im Betrieb über den Boden zu rollen.

3. Arbeitsgerät nach Anspruch 1 oder 2, wobei die dritte Anordnung eines oder mehrerer Bodenbearbeitungswerkzeuge eine Einebnungsvorrichtung (6) aufweist, welche dafür eingerichtet ist, im Betrieb den Boden einzuebnen.

4. Arbeitsgerät nach mindestens einem der vorstehenden Ansprüche, wobei die zweite Anordnung eines oder mehrerer Bodenbearbeitungswerkzeuge in der rückwärtigen Richtung bezogen auf die dritte Anordnung eines oder mehrerer Bodenbearbeitungswerkzeuge angeordnet ist.

5. Arbeitsgerät nach mindestens einem der vorstehenden Ansprüche, wobei die dritte Anordnung eines oder mehrerer Bodenbearbeitungswerkzeuge durch das zweite Parallelogrammgelenk (13) mit einem Unterrahmenelement (14) verbunden ist, wobei das Unterrahmenelement (14) mit dem ersten Parallelogrammgelenk (12) verbunden ist.

6. Arbeitsgerät nach Anspruch 5, wobei sich sowohl das erste als auch das zweite Parallelogrammgelenk (12, 13) in Bezug auf das Unterrahmenelement (14) in die Vorwärtsrichtung erstreckt.

7. Arbeitsgerät nach mindestens einem der Ansprüche 1 bis 5, wobei sich sowohl das erste als auch das zweite Parallelogrammgelenk (12, 13) in die vertikale Richtung erstreckt.

8. Arbeitsgerät nach mindestens einem der vorstehenden Ansprüche, wobei die dritte Anordnung eines oder mehrerer Bodenbearbeitungswerkzeuge im Wesentlichen unter dem zweiten Parallelogrammgelenk (13) angeordnet ist.

9. Arbeitsgerät nach mindestens einem der vorstehenden Ansprüche mit Bezug auf Anspruch 5, wobei sowohl für das erste als auch für das zweite Parallelogrammgelenk (12, 13) jeweils ein oberes und ein unteres Armelement (12a, 12b; 13a, 13b) schwenkbar mit einem Verbindungspunkt aus einer Mehrzahl von Verbindungspunkten, welche am Unterrahmenelement (14) bereitgestellt sind, verbunden ist.

10. Arbeitsgerät nach Anspruch 9, wobei mindestens eines der Armelemente aus der Gruppe umfassend das untere und das obere Armelement (12a, 12b) des ersten Parallelogrammgelenks (12) zusammen mit mindestens einem der Armelemente aus der Gruppe umfassend das untere und das obere Armelement (13a, 13b) des zweiten Parallelogrammgelenks (13) an einem gemeinsamen Verbindungspunkt am Unterrahmenelement (14) verbunden ist.

11. Arbeitsgerät nach mindestens einem der vorstehenden Ansprüche, ferner aufweisend einen ersten Einstellmechanismus (15), welcher funktionell mit dem ersten Parallelogrammgelenk (12) verbunden und dafür eingerichtet ist, einen Arbeitsparameter für das erste Parallelogrammgelenk (12) einzustellen.

12. Arbeitsgerät nach Anspruch 11, wobei ein Einstellelement des ersten Einstellmechanismus (15) an einer Seite mit dem Hauptrahmen (3) und an der anderen Seite mit dem ersten Parallelogrammgelenk (12) verbunden ist.

13. Arbeitsgerät nach Anspruch 5 oder mindestens einem der Ansprüche 6 bis 12 mit Bezug auf Anspruch 5, wobei ein Einstellelement des zweiten Einstellmechanismus (16) an einer Seite mit mindestens einem der Elemente aus der Gruppe umfassend das Unterrahmenelement (14) und das erste Parallelogrammgelenk (12) und an der anderen Seite mit dem zweiten Parallelogrammgelenk (13) verbunden ist.

14. Arbeitsgerät nach mindestens einem der vorstehenden Ansprüche, wobei mindestens eines der Parallelogrammgelenke aus der Gruppe umfassend das erste Parallelogrammgelenk und das zweite Parallelogrammgelenk (12, 13) mit einer Doppelparallelogrammanordnung versehen ist.

## Revendications

1. Instrument de préparation du sol, comprenant :
- un châssis (3) ;
- un premier agencement d'un ou plusieurs outils de culture du sol (4) reçus sur le châssis (3) et configurés pour cultiver le sol ;
- un deuxième agencement d'un ou plusieurs outils de culture du sol, le deuxième agencement d'un ou plusieurs outils de culture du sol étant
- mobile par rapport au premier agencement d'un ou plusieurs outils de culture du sol (4),
- articulé sur le châssis (3) par l'intermédiaire d'une première articulation à parallélogramme (12) et,
- par rapport au premier agencement d'un ou plusieurs outils de culture du sol (4), situé dans une direction vers l'arrière par rapport à une direction de déplacement ou de mouvement de l'instrument lors du fonctionnement ;
- un troisième agencement d'un ou plusieurs outils de culture du sol, le troisième agencement d'un ou plusieurs outils de culture du sol étant
- mobile respectivement par rapport au premier agencement d'un ou plusieurs outils de culture du sol (4) et au deuxième agencement d'un ou plusieurs outils de culture du sol, et
- articulé sur le deuxième agencement d'un ou plusieurs outils de culture du sol par l'intermédiaire d'une deuxième articulation à parallélogramme (13) ; et
- un mécanisme de réglage (16) relié de manière fonctionnelle à la deuxième articulation à parallélogramme (13) et configuré pour régler un paramètre de travail pour la deuxième articulation à parallélogramme (13).

2. Instrument selon la revendication 1, dans lequel le deuxième agencement d'un ou plusieurs outils de culture du sol comprend un premier outil de rouleau (8) configuré pour rouler sur le sol lors du fonctionnement.

3. Instrument selon la revendication 1 ou 2, dans lequel le troisième agencement d'un ou plusieurs outils de culture du sol comprend un dispositif de nivellement (6) configuré pour niveler le sol lors du fonctionnement.

4. Instrument selon l'une au moins des revendications précédentes, dans lequel le deuxième agencement d'un ou plusieurs outils de culture du sol, par rapport au troisième agencement d'un ou plusieurs outils de culture du sol, est situé dans la direction vers l'arrière.

5. Instrument selon l'une au moins des revendications précédentes, dans lequel le troisième agencement d'un ou plusieurs outils de culture du sol est relié à un élément de sous-châssis (14) par l'intermédiaire de la deuxième articulation à parallélogramme (13), l'élément de sous-châssis (14) étant relié à la première articulation à parallélogramme (12).

6. Instrument selon la revendication 5, dans lequel la première tout comme la deuxième articulation à parallélogramme (12, 13) s'étendent, par rapport à l'élément de sous-châssis (14), dans la direction vers l'avant.

7. Instrument selon l'une au moins des revendications 1 à 5, dans lequel la première tout comme la deuxième articulation à parallélogramme (12, 13) s'étendent dans la direction verticale.

8. Instrument selon l'une au moins des revendications précédentes, dans lequel le troisième agencement d'un ou plusieurs outils de culture du sol est situé sensiblement en-dessous de la deuxième articulation à parallélogramme (13).

9. Instrument selon l'une au moins des revendications précédentes, se référant à la revendication 5, dans lequel, à la fois pour la première et la deuxième articulation à parallélogramme (12, 13), un élément de bras supérieur et inférieur (12a, 12b ; 13a, 13b) sont reliés de manière pivotante à un point de jonction d'une pluralité de points de jonction fournis sur l'élément de sous-châssis (14).

10. Instrument selon la revendication 9, dans lequel au moins l'un parmi l'élément de bras supérieur et inférieur (12a, 12b) de la première articulation à parallélogramme (12), ensemble avec au moins l'un parmi l'élément de bras supérieur et inférieur (13a, 13b) de la deuxième articulation à parallélogramme (13), est relié à un point de jonction commun sur l'élément de sous-châssis (14).

11. Instrument selon l'une au moins des revendications précédentes, comprenant en outre un premier mécanisme de réglage (15) se reliant de manière fonctionnelle à la première articulation à parallélogramme (12) et étant configuré pour régler un paramètre de travail pour la première articulation à parallélogramme (12).

12. Instrument selon la revendication 11, dans lequel un élément de réglage du premier mécanisme de réglage (15) est relié au châssis principal (3) sur un côté, et à la première articulation à parallélogramme (12) sur l'autre côté.

13. Instrument selon la revendication 5 ou l'une au moins des revendications 6 à 12, se référant à la revendication 5, dans lequel un élément de réglage du deuxième mécanisme de réglage (16) est relié à au moins l'un parmi l'élément de sous-châssis (14) et la première articulation à parallélogramme (12) sur un côté, et à la deuxième articulation à parallélogramme (13) sur l'autre côté.

14. Instrument selon l'une au moins des revendications précédentes, dans lequel au moins l'une parmi les première et deuxième articulations à parallélogramme (12, 13) est dotée d'un agencement à double parallélogramme.
